(19) Europäisches Patentamt
European Patent Office
Office européen des brevets

(11) Veröffentlichungsnummer: **0 033 777**
**A2**

# (12) EUROPÄISCHE PATENTANMELDUNG

(21) Anmeldenummer: **80107842.9**

(22) Anmeldetag: **12.12.80**

(51) Int. Cl.³: **C 08 F 10/00**, C 08 F 4/64, C 08 F 4/60

(30) Priorität: **08.02.80 DE 3004650**

(43) Veröffentlichungstag der Anmeldung: **19.08.81 Patentblatt 81/33**

(84) Benannte Vertragsstaaten: **BE FR GB IT NL**

(71) Anmelder: **CHEMISCHE WERKE HÜLS AG, Postfach 1320, D-4370 Marl 1 (DE)**

(72) Erfinder: **Herrmann, Christoph, Dr., Heyerhoffstrasse 17 a, D-4370 Marl (DE)**
Erfinder: **Streck, Roland, Dr., Leverkusener Strasse 12, D-4370 Marl (DE)**
Erfinder: **Enzmann, Friedrich, Westfalenstrasse 13, D-4370 Marl (DE)**

## (54) Verfahren zur Polymerisation von Ethylen sowie zu dessen Copolymerisation mit bis zu 30 Gewichtsprozent eines höheren Alpha-Olefins.

(57) Verfahren zur Polymerisation von Äthylen sowie zu dessen Copolymerisation mit bis zu 30 Gewichtsprozent eines höheren $\alpha$-Olefins mit Hilfe eines titanhaltigen Ziegler-Natta-Katalysators, indem man die (Co)-Polymerisation mit einem Katalysator bestehend aus den Umsetzungsprodukten von $\mu$-Oxoalkoxiden der allgemeinen Formel

$$Ti_xO_{(x+y-1)}M_y^m(OR^1)_{(2x+1)}Z_{(m-1)y},$$

in der M ein zwei- bis vierwertiges Metall der 2. bis 8. Gruppe oder den Rest $VO^{3+}$, $R^1$ einen Alkylrest mit 1 bis 10 C-Atomen, Z einen Carboxylatrest mit 1 bis 18 C-Atomen oder einen Alkoholatrest mit 1 bis 10 C-Atomen darstellt, x eine ganze oder gebrochene Zahl von 1 bis 4, y eine ganze oder gebrochene Zahl von 1 bis 2 und m gleich 2, 3 oder 4 sein kann, mit halogenhaltigen aluminiumorganischen Verbindungen der allgemeinen Formel

$$R_n^2AlX_{3-n},$$

in der $R^2$ einen Alkylrest mit 1 bis 16 C-Atomen, X Chlor, Brom oder Jod darstellt, und n eine ganze oder gebrochene Zahl von 0,5 bis 2,5 sein kann, und Aluminiumtrialkylen mit bis zu 16 C-Atomen in jedem Alkylrest durchführt.

EP 0 033 777 A2

Verfahren zur Polymerisation von Ethylen sowie zu dessen Copolymerisation mit bis zu 30 Gewichtsprozent eines höheren α-Olefins

Nachdem es bekannt war, daß man α-Olefine - vornehmlich Ethylen - mit Übergangsmetallhalogeniden ($TiCl_3$) und Metallalkylen ($AlEt_3$) polymerisieren kann (Ziegler), hat es nicht an Versuchen gefehlt, die relativ niedrige Aktivität dieser Katalysatoren zu verbessern.

So konnte z. B. eine Steigerung der Aktivität durch eine synergistische Wirkung von Vanadiumhalogeniden in Kombination mit Titanhalogeniden (DE-PS 12 28 419) und durch Inkorporation von $AlCl_3$ in $TiCl_3$ (E. G. M. Tornquist, Makromol. Chem. 117 (1976), 3437) erzielt werden.

Eine weitere Steigerung wurde mit Hilfe der Umsetzungsprodukte von z. B. Titantetrachlorid mit anorganischen und/oder organischen Magnesiumverbindungen erreicht. Solche Katalysatoren der sogenannten 2. Generation (B. Diedrich, Appl. Poly. Symposium 26 (1975) 1 - 11) werden z. B. hergestellt durch

a) gemeinsames Vermahlen von $TiCl_4$ mit $MgCl_2$ (DE-OS 20 52 136),

b) Umsetzung von $TiCl_4$ mit Magnesiumalkoholaten (DE-OS 19 57 679),

c) Umsetzung von Gemischen aus Titan- und Magnesiumalkoholaten mit Chloriden wie $SiCl_4$ oder $BCl_3$ (DE-OS 21 11 455) oder mit chlorhaltigen Aluminiumalkylen (DE-OS 22 59 516) und

d) Reduktion von $TiCl_4$ mit Magnesiumdialkylen bzw. Grignardverbindungen (DE-OSS 19 24 708 und 20 01 549).

Diese Verfahren des Standes der Technik sind jedoch mit einer Reihe von Mängeln behaftet. Unter anderem resultiert aus dem Verfahren nach a) ein relativ hoher Chlorgehalt im Polymeren, der bei dessen Weiterverarbeitung zusätzliche Additive erfordert und daneben zu Korrosionserscheinungen an den eingesetzten Maschinen führt. Die Verarbeitung wird zudem durch die niedrigen Schüttdichten der Polymerisate erschwert. Die Verfahren gemäß b), c) und d) benutzen als Alkoholate bzw. Alkyle Magnesiumverbindungen, die nur aus dem mit hohem Energieaufwand darstellbaren Metall gewonnen werden können und daher entsprechend teuer sind.

Es sind bereits eine Reihe von Vorschlägen bekannt geworden, den Mängeln abzuhelfen, z. B. durch Einsatz chlorärmerer bis chlorfreier Magnesiumverbindungen /Mg(OH)Cl, MgO, $Mg(OH)_2$, Mg-Acetat/ bei der Reaktion mit $TiCl_4$ (DE-OSS 18 16 048, 21 46 688 und 27 08 647). Auch gemischte Oxoalkoxide von Magnesium und Aluminium wurden eingesetzt (DE-OS 24 14 522). Die so hergestellten Katalysatoren erreichen zwar - bezogen auf darin enthaltenes Ti - eine hohe Aktivität, bringen aber relativ viel inertes Material ein, so daß die pro g Katalysator entstehende Polymermenge doch relativ gering bleibt.

Auch durch Einsatz von Vanadinhalogeniden, z. B. in Kombination mit MgO und $TiCl_4$ (DE-OS 21 40 326), konnte dieser Mangel nicht behoben werden; es wurde lediglich eine Änderung der Molgewichtsverteilung erreicht.

Die vorliegende Erfindung stellt sich daher die Aufgabe, ein Verfahren zur Polymerisation von Ethylen sowie zu dessen Copolymerisation mit bis zu 30 Gewichtsprozent eines oder mehrerer höherer $\alpha$-Olefine zu entwickeln, mit dem es möglich ist, mit hoher Katalysatoraktivität und ohne Auswaschungsschritt rückstandsarme, vor allem aber halogenarme Polymere von hohem Schüttgewicht zu produzieren. Zusätzlich sollen die einsetzbaren Katalysatoren

hinsichtlich Ausgangsmaterial und Präparationstechnik den bisher beschriebenen gegenüber Vorteile aufweisen.

Diese Aufgabe wurde durch die in den Patentansprüchen beschriebenen Maßnahmen gelöst, d. h. durch den Einsatz spezieller titanhaltiger Ziegler-Natta-Katalysatoren, die bisher im wesentlichen nur für die Herstellung von weitgehend amorphen Homo- und Copolymeren von $\alpha$-Olefinen mit 3 oder mehr C-Atomen gemäß dem Verfahren der deutschen Patentanmeldung P 29 06 639.5 verwendet wurden.

Das erfindungsgemäße Verfahren eignet sich zunächst für die Homopoymerisation des Ethylens. Darüber hinaus ist auch dessen Copolymerisation mit bis zu 30 Gewichtsprozent, vorzugsweise 0,1 bis 20 Gewichtsprozent, bezogen auf das Copolymere eines $\alpha$-Olefins der allgemeinen Formel $R^3-CH=CH_2$ (III) möglich. In dieser allgemeinen Formel bedeutet $R^3$ einen Alkylrest mit 1 bis 30 C-Atomen, vorzugsweise 1 bis 8 C-Atomen. Bevorzugte $\alpha$-Olefine sind Propen und Buten-(1).

Die als Übergangsmetallkomponenten der beim erfindungsgemäßen Verfahren einsetzbaren Katalysatoren verwendeten µ-Oxoalkoxide der allgemeinen Formel

$$Ti_xO_{(x+y-1)}M^m_y(OR^1)_{(2x+1)}Z_{(m-1)y} \quad (I)$$

können leicht nach bekannten Methoden hergestellt werden (F. Schmid in Houben-Weyl, Band 6/2 (1963) und Ph. Teyssie et al., Inorg. Chem. Acta 19 (1976) 203). Geeignete Metalle M sind dabei solche der Gruppen 2 bis 8 des Periodischen Systems der Elemente in den Wertigkeitsstufen m = 2, 3 oder 4, vorzugsweise 2. Typische Vertreter sind für m = 2: Magnesium, Mangan, Zink, Chrom, Molybdän, Eisen, Kobalt und Nickel; für m = 3: Aluminium, Lanthan, Cer, Vanadin, Chrom und Eisen; für m = 4: Titan, Zirkon, Vanadin und Cer. M steht weiterhin für den Vanadylrest $VO^{3+}$. Bevorzugtes Metall ist Magnesium.

In der allgemeinen Formel stellt weiterhin $R^1$ einen Alkylrest mit 1 bis 10 C-Atomen, vorzugsweise 2 bis 4 C-Atomen, Z einen Carboxylatrest mit bis zu 18 C-Atomen, vorzugsweise 2 bis 8 C-Atomen, besonders bevorzugt den Acetatrest, oder einen Alkoholatrest mit 1 bis 10 C-Atomen, vorzugsweise 2 bis 4 C-Atomen, dar. Der Rest Z kann dabei auch ungesättigt und/oder durch Halogenatome, Alkoxi- und gegebenenfalls substituierte Aminogruppen substituiert sein. Schließlich kann x eine ganze oder gebrochene Zahl von 1 bis 4, vorzugsweise 1 bis 2, und y eine ganze oder gebrochene Zahl von 1 bis 2, vorzugsweise 1 bis 1,5, sein.

Ein möglicher Weg zur Herstellung von µ-Oxoalkoxiden ist die partielle Cohydrolyse von 2 : 1-Alkoholat-Komplexen nach Meerwein bzw. Alkoholatgemischen von $Ti(OR^1)_4$ und $M^m(OR^1)_m$, wobei M, $R^1$ und m wiederum die in der Formel (I) angegebene Bedeutung haben. Die Reste $R^1$ im Titan- und Metallalkoholat brauchen dabei nicht identisch zu sein. Besonders bevorzugte µ-Oxoalkoxide sind solche mit M = Magnesium und einem molaren Mg : Ti-Verhältnis von 0,25 bis 1,5.

Ein weiterer Weg ihrer Herstellung ist die thermische Esterabspaltung aus Gemischen von Titanalkoholaten der allgemeinen Formel $Ti(OR^1)_4$, in der die Reste $R^1$ gleiche oder verschiedene Alkylreste mit 1 bis 10 C-Atomen, vorzugsweise 2 bis 4 C-Atomen, sein können, und wasserfreien Carboxylaten, vorzugsweise Acetaten, von 2-, 3- oder 4-wertigen Metallen, wie z. B. Magnesium, Mangan, Zink, Aluminium, Lanthan, Cer oder Zirkon, Vanadyl, Chrom, Molybdän, Eisen oder aus Gemischen von Titancarboxylaten bzw. Titanalkoholatcarboxylaten der allgemeinen Formel $TiZ_4$, in der Z die in der Formel (I) angegebene Bedeutung hat, mit Metallalkoholaten $M^m(OR^1)_m$, wobei M, $R^1$ und m ebenfalls die in der Formel (I) angegebene Bedeutung haben. Die Esterabspaltung wird im allgemeinen innerhalb des Temperaturbereichs von 150 bis 250 °C durchgeführt.

Aus technisch-wirtschaftlichen Gründen ist der zweite Weg zur Synthese der µ-Oxoalkoxide dem ersten vorzuziehen, da er von den gegenüber den Alkoholaten sehr viel wohlfeileren Acetaten der Metalle ausgeht, die zu ihrer Darstellung nicht einer vorherigen energieaufwendigen Reduktion des Metalls zur nullwertigen Stufe bedürfen, sondern z. B. aus Oxid, Hydroxid oder Carbonat gewonnen werden können. Die Dehydratisierung der Metallacetate kann sowohl durch Essigsäureanhydrid als auch durch Erhitzen im Vakuum erfolgen (D. A. Edwards et al., Can. J. Chem. 46 (1968) 3443).

Es besteht die Mgölichkeit, die µ-Oxoalkoxide vor der Umsetzung mit der Komponente 1.2 zu modifizieren. Dies kann einmal geschehen durch Fixierung auf hydroxylgruppenhaltige Träger, wie z. B. Kieselsäure ($SiO_2$) und Aluminiumoxide, oder durch 1- bis 15stündiges Covermahlen mit halogenhaltigen Trägern, wie z. B. Magnesiumchlorid, Seltenerdchlorid und Aluminiumchlorid (K. H. Reichert, Chem.-Ing.-Techn. 49 (1977) 626 - 33 und J. C. W. Chien, J. T. T. Hsieh, Journ. of Polym. Sci., Polym. Chem. Ed. 14 (1976) 1915 - 32), zum anderen durch Umsetzung mit Vanadinoxitrichlorid, Vanadintetrachlorid oder Titantetrachlorid und Zirkontetrachlorid. Die Umsetzung kann z. B. während einer Dauer von 0,5 bis 10 Stunden bei 50 bis 200 °C erfolgen. Geeignet sind molare Verhältnisse des in dem Modifizierungsmittel enthaltenden Metalls zum Titan im unmodifizierten µ-Oxoalkoxid im Bereich von 0,5 bis 4.

Die vorher in den einsetzbaren Lösemitteln löslichen µ-Oxoalkoxide werden durch diese Modifizierungsverfahren heterogenisiert.

Eine bevorzugte Modifizierung ist die Umsetzung mit $TiCl_4$ und den gesamten Vanadinchloriden. Bei der Umsetzung mit den Vanadinchloriden ist ein Molverhältnis von 0,5 bis 2, bezogen auf unmodifiziertes µ-Oxoalkoxid, besonders bevorzugt.

Sowohl die reinen als auch die modifizierten µ-Oxoalkoxide sind in der Wirksamkeit den Gemischen der Ausgangsstoffe weit überlegen, was a priori nicht zu erkennen war, wie aus den Vergleichsbeispielen A und B hervorgeht.

Für die Umsetzung mit den µ-Oxoalkoxiden der allgemeinen Formel (I) geeignete halogenhaltige aluminiumorganische Verbindungen der allgemeinen Formel $R^2_nAlX_{3-n}$ (II), in der $R^2$ einen Alkylrest mit 1 bis 16 C-Atomen, vorzugsweise 2 bis 4 C-Atomen, X Chlor, Brom oder Jod darstellt, vorzugsweise Chlor, und n eine ganze oder gebrochene Zahl von 0,5 bis 2,5, vorzugsweise 1 bis 2, sein kann, sind z. B. Diethylaluminiummonochlorid ($AlEt_2Cl$), Ethylaluminiumdichlorid ($AlEtCl_2$), Isobutylaluminiumdichlorid /$Al(iBu)_3$/ und Gemische dieser Verbindungen.

Zur Umsetzung der Katalysatorkomponente 1.1 mit der Katalysatorkomponente 1.2 wird 1.1 in einem gesättigten Kohlenwasserstoff, wie z. B. Hexan, Heptan, das überlicherweise in der Ethylenpolymerisation verwandte hydrierte Benzin, Cyclohexan, Isopropylcyclohexan und hydrierte Dieselöle gelöst und in einer Konzentration von 0,25 bis 1,5 Mol Übergangsmetall pro Liter Lösemittel mit einer entsprechenden Lösung von 1.2 vereinigt. Dabei geht man so vor, daß man die im allgemeinen 0,25- bis 1,5molare Lösung von 1.1 vorlegt und dann eine 0,5- bis 2molare Lösung, vorzugsweise eine 1molare Lösung, von 1.2 in einem der oben angeführten Lösemittel bei möglichst konstanter Temperatur im Bereich von 0 bis 100 °C über eine Zeitdauer von im allgemeinen 0,5 bis 2 Stunden zutropfen läßt. Anschließend erfolgt eine Alterung der entstandenen Suspension über einen Zeitraum von 1 bis 10 Stunden bei Temperaturen im Bereich von 50 bis 200 °C. Danach wird filtriert, der Niederschlag mit einem o. a. Lösemittel gewaschen und schließlich suspendiert.

Der polymerisationsaktive Katalysator wird zweckmäßigerweise in der Polymerisationsapparatur durch Reaktion der

Katalysatorkomponente 2 mit dem Umsetzungsprodukt aus 1.1 und 1.2 hergestellt. Als Katalysatorkomponente 2 werden dabei Aluminiumtrialkyle mit bis zu 16, vorzugsweise 3 bis 10 C-Atomen, in jedem Alkylrest eingesetzt. Besonders bevorzugt ist Tri-iso-butylaluminium. Im allgemeinen werden die Aluminiumtrialkyle in einer 0,5- bis 10molaren, vorzugsweise einer etwa 1molaren Lösung in einem gesättigten Kohlenwasserstoff, der mit dem Polymerisationslösemittel verträglich ist, in einer solchen Menge eingesetzt, daß das Verhältnis Ti : Al (aus Katalysatorkomponente 2) 1 : 2 bis 1 : 20 beträgt.

Die Polymerisation kann kontinuierlich oder diskontinuierlich durchgeführt werden. Als Lösemittel (LM) werden gewöhnlich solche eingesetzt, wie sie bereits bei der Herstellung des Katalysators beschrieben sind. Es können aber auch flüssige $C_3$- und/oder $C_4$-Schnitte oder verflüssigte $\alpha$-Olefine als Lösemittel eingesetzt werden. Die Polymerisationstemperatur beträgt im allgemeinen 30 bis 150, vorzugsweise 40 bis 90 °C.

Die Regelung der Molekulargewichte ist in bekannter Weise durch Zugabe von Wasserstoff möglich (z. B. gemäß DE-AS 14 20 503). Darüber hinaus werden die Molgewichte von der Polymerisationstemperatur, dem Druck und der Zusammensetzung der einzelnen Katalysatorkomponenten beeinflußt. Die Aufarbeitung der Polymerisationsansätze kann nach den üblichen Methoden des Standes der Technik, wie z. B. Abnutschen der Polymersuspension, erfolgen.

Die nach dem erfindungsgemäßen Verfahren hergestellten Polymere können für alle Verwendungszwecke eingesetzt werden, die für Ethylenhomo- bzw. Copolymerisate bekannt sind, z. B. zur Herstellung von Spritzgußartikeln.

In den nachfolgenden Beispielen und Vergleichsbeispielen, die das erfindungsgemäße Verfahren näher erläutern, wurde die Viskositätszahl I ($cm^3/g$) nach DIN 53 728 und die

Schmelzviskosität bei 190 °C (MFI) bei unterschiedlichen Belastungen (5 kg bzw. 10 kg) nach DIN 53 735 bestimmt. Die Ausbeuten werden angegeben als g Polyethylen pro mMol Ti-Verbindung pro bar $C_2H_4$ und pro 1 Stunde. Die Molekulargewichtsverteilung wurde durch Gelpermeationschromatographie ermittelt.

Herstellung von µ-Oxoalkoxiden durch a) Esterkondensation und b) Cohydrolyse

Bei der Methode a) wurden die in den Tabellen 1 und 2 angegebenen Reaktionspartner in den genannten Mengen in Decalin während der angegebenen Zeit am Rückfluß erhitzt. Nach Abziehen des Esters und des Decalins (der Essigsäurebutylestergehalt (AcOBu) wurde gaschromatographisch bestimmt) wurde der verbleibende Rückstand in hydriertem Benzin aufgenommen und gegebenenfalls filtriert. Die Konzentration an Titan betrug ca. 0,4 Mol/Liter.

Das feste µ-Oxoalkoxid VII (Tabelle 2) enthielt 17,3 % Ti und 4,78 % Al, entsprechend ein Molverhältnis Al/Ti = 0,49.

Bei der Methode b) wurden die bei der Darstellung der µ-Oxoalkoxide I b und IX b angegebenen Alkoholate in den jeweiligen Mengen in ca. 2/3 der angegebenen LM-Menge 1/2 h unter Rühren am Rückfluß erhitzt. Dann wurde die stöchiometrische Menge $H_2O$ in dem restlichen LM zugetropft und weitere 10 h am Rückfluß gekocht. Nach Abkühlen wurde filtriert und bis zur Trockne eingedampft. Der feste Rückstand wurde in einer hydrierten Benzinfraktion (Siedepunkt ca. 68 °C) aufgenommen.

Das feste Oxoalkoxid I b (Tabelle 1) enthielt 18,9 % Ti und 3,46 % Mg, entsprechend einem Molverhältnis von Mg/Ti = 0,36. In dem bei der Darstellung aufgefangenen Destillat wurde gaschromatographisch neben n-Butanol 164 mMol Ethanol gefunden. Die Ergebnisse enthalten die Tab. 1 und 2.

Tabelle 1

Darstellung der µ-Oxoalkoxide

| µ-Oxo-alkoxid | $Ti(OBu)_4$ (mM) | $Mg(OEt)_2$ (mM) | $Mg(OAc)_2$ (mM) | Decalin (ml) | Reaktionszeit (h) | AcOBu (mM) | Mg/Ti (Mol/Mol) |
|---|---|---|---|---|---|---|---|
| I a | 400 | | 200 | 400 | 10 | 193 | 0,35 |
| I b | 200 | 100 | | 200 1) | 10 | - | 0,36 |
| II | 400 | | 400 | 600 | 12 | 483 3) | 0,87 |
| III | 200 | | 400 | 200 | 10 | 224 | 0,82 |
| IV | 100 | | 100 | 100 | 24 4) | 128 | 1,0 |
| V | 100 2) | 100 | | 100 | 10 | 49 5) | } 1,34 |
| | | | 100 | 100 | 10 | 76 | |
| VI | 100 6) | 200 | | 100 | 10 | 27 5) | 1,1 |

1) Darstellungsweise durch Cohydrolyse (b) in n-Butanol mit 200 mM $H_2O$

2) als Ti-Verbindung wurde nicht $Ti(OBu)_4$, sondern $Ti(OBu)_2(OAc)_2$ eingesetzt und nacheinander mit je 100 mM $Mg(OEt)_2$ und $Mg(OAc)_2$ umgesetzt

3) die µ-Oxoalkoxidlösung wurde nach der Umsetzung nicht filtriert

4) kontinuierliche Abdestillation des Esters

5) Ethylacetat

6) es wurde $Ti(OBu)_2(OAc)_2$ eingesetzt

Tabelle 2

Darstellung der µ-Oxoalkoxide

| µ-Oxo-alkoxid | $Ti(OBu)_4$ (mM) | $M^n$ | $M^n(OAc)_n$ (mM) | Decalin (ml) | Reaktionszeit (h) | AcOBu (mM) | M/Ti |
|---|---|---|---|---|---|---|---|
| VII | 100 | $Al^{3+}$ | 50 | 100 | 12 | 111 | 0,49 |
| VIII | 100 | $La^{3+}$ | 50 | 100 | 5 | 74 | 0,5 |
| IX a) | 200 | $Zr^{4+}$ | 100 | 200 | 10 | 156 | 0,53 |
| IX b) | 100 | $Zr^{4+}$ | 50 1) | 150 2) | 6 | - | 0,23 |
| X | 100 | $Cr^{3+}$ | 50 | 100 | 10 | 51 | 0,18 |
| XI | 50 | $Mo^{2+}$ | 25 | 50 | 3 | 35 | 0,5 |
| XII | 100 | $Mn^{2+}$ | 50 | 100 | 6 | 55 | 0,5 |
| XIII | 100 | $Fe^{2+}$ | 50 | 100 | 3 | 90 | 0,43 |
| XIV | 100 | $V(O)^{3+}$ | 100 3) | 250 2) | 4 | - | 1,0 |

1) Darstellungsweise durch Cohydrolyse (b) mit $Zr(OnPr)_4$ + 2 $H_2O$ (100 mM) in n-BuOH

2) n-Butanol

3) Methode (b) mit VO $(OnBu)_4$ und 100 mM $H_2O$

Umsetzung der µ-Oxoalkoxid-Lösungen (hydriertes Benzin als Lösemittel) mit halogenhaltigen aluminiumorganischen Verbindungen

Die µ-Oxoalkoxide I bis XIV und die in den Vergleichsbeispielen eingesetzten Verbindungen wurden jeweils mit einer 1molaren halogenhaltigen aluminiumorganischen Verbindung der allgemeinen Formel II in hydriertem Benzin in dem jeweils angegebenen Molverhältnis Aluminium : Titan umgesetzt. Dabei wurde die Lösung mit der Katalysatorkomponente 1.2 tropfenweise zu der vorgelegten Lösung der Katalysatorkomponente 1.1 bei 25 bis 30 °C gegeben. Anschließend wurde 1 Stunde - wenn nicht anders angegeben - bei 68 °C (Siedepunkt des hydrierten Benzins) gealtert. Nach Filtration der Suspension wurde der Niederschlag mit dem angegebenen Lösemittel mehrmals gewaschen, in hydriertem Benzin aufgenommen und die so erhaltene Suspension bei der Polymerisation eingesetzt.

Beispiele 1 bis 17 und Vergleichsbeispiele A bis E

Ein 5 l-Stahlautoklav wurde jeweils mit 2,5 l hydriertem Benzin beschickt, dem 5 ml einer 1molaren $Al(iBu)_3$-Lösung in Hexan und die jeweils angegebene Menge Titanverbindung (in mMol) hinzugefügt wurden. Anschließend wurde der Autoklav mit Wasserstoff gespült und auf 85 °C aufgeheizt. Nach Aufdrücken von 3 bar $H_2$ wurde die Polymerisation gestartet durch weiteres Aufdrücken von 7 bar Ethen. Während der Dauer von 1 Stunde wurde Ethen kontinuierlich zugeführt bei konstantem Gesamtdruck von 11 bar. Die Polymerisation wurde beendet durch Abkühlen auf Raumtemperatur und Ablassen der Polymersuspension auf eine Nutsche. Das Produkt wurde anschließend durch Trocknen bei 50 °C im Vakuumtrockenschrank von Lösungsmittelresten befreit.

Das Polymere aus Beispiel 6 wurde weiterhin charakterisiert durch die IR-spektroskopisch bestimmten Doppelbindungen (DB)/1 000 C-Atome mit transmittelständigen DB < 0,01,

Vinyl-DB = 0,07, Vinyliden-DB = 0,03 und $CH_3$-Gruppen/100 C-Atome mit 0,20; des weiteren wurde der Gesamtaschegehalt bestimmt mit 110 ppm, Ti = 11 ppm, Mg = 4 ppm, Al = 49 ppm und Cl = 31 ± 3 ppm.

Zum Vergleich wurden in den Beispielen A und B die nicht sauerstoffverbrückten Ausgangsverbindungen (ohne Esterkondensation) eingesetzt, in den Beispielen C, D und E ein Gemisch von Metallalkoholaten.

Die Ergebnisse enthält die Tabelle 3.

Tabelle 3

Ethylenpolymerisation

| Bsp. Nr. | µ-Oxo-alkoxid | Cokatalysator | Al/Ti | Ti (mM) | Aktivität gPE/mM Ti·bar·h | $MFI_5$/190 °C (g/10') | I ($cm^3$/g) | $MFI_{10/5}$ | $U_{GPC}$ | Schüttgewicht (g/l) |
|---|---|---|---|---|---|---|---|---|---|---|
| 1 a | I a | $AlEtCl_2$ | 3 | 0,11 | 382 | 2,91 | 232 | 2,72 | 5,9 | 260 |
| 1 b | I b | $AlEtCl_2$ | 3 | 0,35 | 204 | 1,26 | 269 | 2,86 | 8,2 | 392 |
| 2 | II | $AlEtCl_2$ | 6 | 0,11 | 730 | 1,99 | 228 | 2,81 | 7,8 | 346 |
| 3 | II | $AlEt_{1,5}Cl_{1,5}$ | 6 | 0,1 | 496 | 1,97 | | 3,01 | | 322 |
| 4 | III | $AlEtCl_2$ | 8,5 | 0,07 | 866 | 0,85 | | 2,82 | | 250 |
| 5 | IV | $AEtCl_2$ | 3 | 0,11 | 584 | 1,50 | | 2,88 | | 220 |
| 6 | IV | $AlEtCl_2$ | 6 | 0,09 | 1093 | 1,55 | 278 | 2,85 | 7,9 | 300 |
| 7 | V | $AlEtCl_2$ | 6 | 0,11 | 904 | 1,83 | | 2,96 | | 348 |
| 8 | V | $AlEt_2Cl$ | 7,3 | 0,07 | 394 | 1,42 | | 2,70 | | 391 |
| 9 | VI | $AlEtCl_2$ | 5 | 0,11 | 1376 | 5,06 | | 2,97 | | 400 |

0033777

0033777

Tabelle 3 - Fortsetzung

Äthylenpolymerisation

| Vgl. Bsp. Nr. | μ-Oxoalkoxid | Mg/Ti | $AlEtCl_2$/Ti | Ti (mM) | Aktivität gPE/mM Ti·bar·h | $MFI_5$/190 °C (g/10') | I ($cm^3$/g) | $MFI_{10/5}$ | $U_{GPC}$ | Schüttgewicht (g/l) |
|---|---|---|---|---|---|---|---|---|---|---|
| A | $Ti(OBu)_4$ [1] + $Mg(OAc)_2$ | 0,55 | 5 | 0,30 | 251 | 2,89 | | 2,80 | | 290 |
| B | $Ti(OBu)_4$ [2] + $Mg(OAc)_2$ | 1,0 | 10 | 0,10 | 374 | 0,86 | 324 | 3,19 | 12,4 | 214 |
| C | $Ti(OBu)_4$ [2] + $Mg(OEt)_2$ | 1,0 | 5 | 0,11 | 1080 | 9,37 | | 2,90 | | 306 |
| D | $Ti(OBu)_4$ [2] + $Mg(OEt)_2$ | 2,0 | 6 | 0,11 | 1280 | 3,81 | | 2,72 | | 372 |

1) Lösung von $Mg(OAc)_2$ und $Ti(OBu)_4$ in hydriertem Benzin (Kp 68 °C)

2) Suspension der Ti- und Mg-Verbindungen nach 1 Stunde Rückfluß in hydriertem Benzin

<u>Tabelle 3</u> - Fortsetzung

Ethylenpolymerisation

| Bsp. Nr. | μ-Oxoalkoxid | Cokatalysator | Al/Ti | Ti (mM) | Aktivität gPE/mM Ti·bar·h | $MFI_5$/190 °C (g/10') | I ($cm^3$/g) | $MFI_{5/10}$ | $U_{GPC}$ | Schüttgewicht (g/l) |
|---|---|---|---|---|---|---|---|---|---|---|
| 10 | VII | $AlEtCl_2$ | 3 | 0,55 | 80 | 0,45 | 380 | 3,26 | 23,2 | 318 |
| 11 | VIII | $AlEtCl_2$ | 6 | 0,5 | 170 | 0,14 | 476 | 3,43 | 13,4 | 267 |
| 12 a | IX a | $AlEtCl_2$ | 6 | 0,23 | 150 | 0,11 | 564 | 2,91 | 13,3 | 196 |
| 12 b | IX b | $AlEtCl_2$ | 6 | 0,31 | 100 | 0,38 | 438 | 3,13 | 12,9 | 164 |
| 13 | X | $AlEtCl_2$ | 6 | 0,11 | 130 | 0,47 | 352 | 3,24 | 10,9 | 202 |
| 14 | XI | $AlEtCl_2$ | 3 | 0,35 | 90 | | 620 | | 16,7 | 181 |
| 15 | XII | $AlEt_{1,5}Cl_{1,5}$ | 6 | 0,28 | 300 | 1,50 | 258 | 2,96 | 3,7 | 307 |
| 16 | XIII | $AlEtCl_2$ | 3 | 0,41 | 260 | | 792 | | 3,9 | 256 |
| 17 | XIV | $AlEtCl_2$ | 3 | 0,045 | 1030 | 0,34 | | 2,94 | | 198 |
| Vgl. Bsp. | | | | | | | | | | |
| E | 2 $Ti(OBu)_4$ + $Zr(OBu)_4$ | $AlEtCl_2$ | 6 | 0,5 | 10 | 0,06 | | 2,67 | | 192 |

Beispiele 18 bis 26

Gegenüber den Beispielen 1 bis 17 wurden Änderungen beim Cokatalysator der Komponente 1.2, beim Lösungsmittel (LM) und der Alterungstemperatur vorgenommen.

Die Aktivierung und die Polymerisation erfolgte wie in den vorgenannten Beispielen beschrieben. Die Ergebnisse zeigt Tabelle 4.

<u>Tabelle 4</u>

Ethylenpolymerisation

| Bsp. Nr. | µ-Oxo-alkoxid | Cokatalysator $AlR_xCl_{3-x}$ | Al/Ti | Reaktions-temparatur (°C) | Ti (mM) | Aktivität gPE/mM Ti·bar·h | $MFI_5$/190 °C (g/10') | $MFI_{10/5}$ | Schüttgewicht (g/l) |
|---|---|---|---|---|---|---|---|---|---|
| 18 | V | $AlEt_2Cl$ | 7,3 | 68 | 0,066 | 394 | 1,42 | 2,70 | 391 |
| 19 | V | $AlEt_2Cl$ | 14,5 | 68 | 0,054 | 562 | 2,27 | 2,85 | 396 |
| 20 | II | $AlEt_{1,5}Cl_{1,5}$ | 6 | 68 | 0,099 | 496 | 1,97 | 3,01 | 322 |
| 21 | II | $AlEt_{1,5}Cl_{1,5}$ | 12 | 68 | 0,096 | 523 | 1,02 | 2,81 | 333 |
| 22 | IV | $AlEtCl_2$ | 3 | 68 | 0,111 | 617 | 1,17 | 2,79 | 210 |
| 23 | IV | $AlEtCl_2$ | 3 | 98[1)] | 0,112 | 724 | 1,72 | 2,77 | 234 |
| 24 | IV | $AlEtCl_2$ | 5 | 68 | 0,112 | 812 | 2,39 | 2,83 | 288 |
| 25 | IV | $AlEtCl_2$ | 5 | 98[1)] | 0,112 | 1100 | 1,01 | 2,75 | 290 |
| 26 | V | $AlEtCl_2$ | 3 | 120[2)] | 0,106 | 370 | 1,35 | 2,87 | 336 |

1) LM = Heptan

2) LM = Decalin

Beispiel 27

In einer Kugelmühle wurden 12,33 g wasserfreies Seltenerdchlorid (~41 % Ce, ~27 % La, ~10 % Nd) mit 50 ml einer Lösung des µ-Oxoalkoxids II in hydriertem Benzin, entsprechend 20 mM Ti, bei ca. 25 °C 1 Stunde vermahlen und anschließend mit 60 mM $AlEtCl_2$, wie auf Seite 11 beschrieben, umgesetzt. Nach Filtrieren und Waschen wurde der Kontakt analog den Beispielen 1 bis 17 eingesetzt. Die Aktivität betrug 720 g PE/mM Ti·bar·h bei einer Schmelzviskosität $MFI_5$/190 °C (g/10') von 2,79 und einem Schüttgewicht von 280 (g/l).

Beispiel 28

In einer Kugelmühle wurden 9,52 g (≙ 100 mM) wasserfreies Magnesiumchlorid mit 50 ml einer Lösung des µ-Oxoalkoxids II (≙ 20 mM Ti) bei 25 °C 1 Stunde vermahlen und anschließend, wie in Beispiel 27 beschrieben, fortgefahren. Die Aktivität dieses Kontaktes betrug 1170 g PE/mM Ti·bar·h, das Polymer hatte einen $MFI_5$/190 °C (g/10') von 3,72 und ein Schüttgewicht von 326 (g/l).

Beispiele 29 bis 37

Zu 50 ml einer Lösung des entsprechenden Oxoalkoxids (≙ 20 mM Ti) in hydriertem Benzin wurde die als M/Ti-Verhältnis angegebene Menge Übergangsmetall(ÜMe)-halogenid (1molar in hydriertem Benzin) bei Raumtemperatur zugetropft und anschließend 1 Stunde am Rückfluß erhitzt. Zu dieser Suspension wurde die aluminiumorganische Verbindung als 1molare Lösung in Hexan tropfenweise bei ca. 25 °C zudosiert. Nach einer 1/2 Stunde Alterung bei Rückflußtemperatur wurde filtriert, gewaschen und der Katalysatorrückstand in 250 ml hydriertem Benzin suspendiert. Die Polymerisationen erfolgten gemäß dem in den Beispielen 1 bis 17 genannten Verfahren. Das in Beispiel 32 erhaltene Polyethylen hatte eine Viskositätszahl I = 275

$cm^3/g$ und eine Molgewichtsverteilung U = 7,6. Die Katalysatorausnutzung betrug 38,5 kg PE/g Katalysator. Im Polymeren wurde die Gesamtasche mit 150 ppm bestimmt, der UMe-Gehalt (Ti+V) mit 12 ppm und der Chlorgehalt mit 21 ± 2 ppm. Die weiteren Ergebnisse enthält Tabelle 5.

<u>Tabelle 5</u>

Ethylenpolymerisation mit ÜMe-halogenid-modifizierten µ-Oxoalkoxid-Katalysatoren

| Bsp. Nr. | Oxoalkoxid | $MCl_m$ | M/Ti | $AlEt_xCl_{3-x}$ X | $AlEt_xCl_{3-x}$ Al/Ti | Ti+M (mM) | Aktivität gPE/mM (Ti+M)·bar·h | $MFI_5$/190 °C (g/10') | $MFI_{10/5}$ | Schütt-gewicht (g/l) |
|---|---|---|---|---|---|---|---|---|---|---|
| 29 | III | $VOCl_3$ | 0,3 | 2 | 8 | 0,096 | 595 | 1,47 | 2,88 | 316 |
| 30 | III | $VOCl_3$ | 1,1 | 2 | 7,2 | 0,09 | 1035 | 1,05 | 2,70 | 258 |
| 31 | III | $VOCl_3$ | 2,8 | 2 | 6,4 | 0,074 | 580 | 0,58 | 3,17 | 328 |
| 32 | IV | $VOCl_3$ | 1,0 | 1,5 | 4 | 0,062 | 1750 | 1,04 | 2,87 | 296 |
| 33 | IV | $VOCl_3$ | 2,0 | 2 | 9 | 0,1 | 1380 | 1,37 | 2,83 | 356 |
| 34 | IV | $VOCl_3$ | 1,0 | 1 | 2,2 | 0,072 | 1450 | 0,81 | 2,95 | 312 |
| 35 | I a | $TiCl_4$ | 1,0 | 1 | 5 | 0,39 | 110 | 0,13 | 3,53 | 280 |
| 36 | XIV | $TiCl_4$ | 0,75 | 1 | 3 | 0,25 | 200 | 0,75 | 3,41 | 253 |
| 37 | VII | $ZrCl_4$ | 0,5 | 1 | 6 | 0,75 | 90 | 0,79 | 3,16 | 226 |

Beispiel 38

In einem 5 l-Stahlautoklaven wurden 2,5 l hydriertes Benzin vorgelegt und nacheinander 5 ml einer 1molaren $Al(iBu)_3$-Lösung in Hexan und 0,058 mMol der Ti/V-Verbindung aus Beispiel 32 zudosiert. Nach Aufheizen auf 70 °C wurde 1 bar $H_2$ aufgedrückt. Anschließend wurden 100 ml Buten-(1) eingeschleust und 7 bar $C_2H_4$ aufgedrückt zu einem Gesamtdruck von 9,5 bar. Nach 1 Stunde Polymerisation bei diesem Druck wurde der Autoklav auf Raumtemperatur abgekühlt und 438 g Copolymerisat nach Aufgabe auf eine Nutsche abgetrennt. Das Copolymere hatte einen $MFI_5$/190 °C (g/10') von 0,17 und ein Verhältnis $MFI_{10/5}$ von 3,18, das Schüttgewicht betrug 170 (g/l), die Dichte 0,932 ($g/cm^3$) (20 °C). Der IR-spektroskopisch bestimmte Buten-(1)-anteil betrug 1,8 Gewichtsprozent.

Patentansprüche:

1. Verfahren zur Polymerisation von Ethylen sowie zu dessen Copolymerisation mit bis zu 30 Gewichtsprozent eines höheren α-Olefins mit Hilfe eines titanhaltigen Ziegler-Natta-Katalysators,
dadurch gekennzeichnet,
daß man die (Co)-Polymerisation mit einem Katalysator bestehend aus

1 den Umsetzungsprodukten von

1.1 μ-Oxoalkoxiden der allgemeinen Formel
$Ti_xO_{(x+y-1)}M^m_y(OR^1)_{(2x+1)}Z_{(m-1)y}$ (I), in der

1.1.1 M ein zwei- bis vierwertiges Metall der 2. bis 8. Gruppe oder den Rest $VO^{3+}$,

1.1.2 $R^1$ einen Alkylrest mit 1 bis 10 C-Atomen,

1.1.3 Z einen Carboxylatrest mit 1 bis 18 C-Atomen oder einen Alkoholatrest mit 1 bis 10 C-Atomen darstellt,

1.1.4 x eine ganze oder gebrochene Zahl von 1 bis 4,

1.1.5 y eine ganze oder gebrochene Zahl von 1 bis 2 und

1.1.6 m gleich 2, 3 oder 4 sein kann, mit

1.2 halogenhaltigen aluminiumorganischen Verbindungen der allgemeinen Formel
$R^2_nAlX_{3-n}$ (II), in der

1.2.1 $R^2$ einen Alkylrest mit 1 bis 16 C-Atomen,

1.2.2 X Chlor, Brom oder Jod darstellt, und

1.2.3 n eine ganze oder gebrochene Zahl von 0,5 bis 2,5 sein kann, und

2 Aluminiumtrialkylen mit bis zu 16 C-Atomen in jedem Alkylrest durchführt.

2. Verfahren nach Anspruch 1, dadurch gekennzeichnet, daß die Komponente 1.1 vor der Umsetzung mit der Komponente 1.2 auf einen hydroxylgruppenhaltigen Träger aufgebracht wird.

3. Verfahren nach Anspruch 1, dadurch gekennzeichnet, daß die Komponente 1.1 vor der Umsetzung mit der Komponente 1.2 mit einem Metallhalogenid behandelt wird.

4. Verfahren nach Anspruch 3, dadurch gekennzeichnet, daß man als Metallhalogenid $VOCl_3$, $VCl_4$, $TiCl_4$ oder $ZrCl_4$ verwendet.